# EUROPEAN PATENT APPLICATION

(11) **EP 4 672 393 A1**
(43) Date of publication of application: **31.12.2025**
(21) Application number: 24819553.9
(22) Date of filing: 04.06.2024
(51) Int. Cl.: H01M 10/04, B65H 35/00, H01M 50/256, B65H 5/14

(54) **APPARATUS FOR MANUFACTURING ELECTRODE ASSEMBLY**

(30) Priority: 07.06.2023 KR 20230073172; 21.05.2024 KR 20240065595
(71) Applicant: LG Energy Solution, Ltd., Seoul 07335 (KR)
(72) Inventor: KEUM, Dongyeon, Daejeon 34122 (KR); JEONG, Dohwan, Daejeon 34122 (KR); BAEK, Ju Hwan, Daejeon 34122 (KR); JO, Kwangun, Daejeon 34122 (KR); LEE, Hee Moon, Daejeon 34122 (KR); KIM, Jungwon, Daejeon 34122 (KR)
(74) Representative: Goddar, Heinz J.
(86) International application number: PCT/KR2024/007603
(87) International publication number: WO 2024/253402

(57) **Abstract**

An apparatus for manufacturing an electrode assembly according to one embodiment of the present disclosure includes a supply unit that supplies a plurality of objects in a sheet shape, a cutting unit that cuts the plurality of objects in a sheet shape for each object, and a first transport unit that includes a transport path for transporting the cut objects, wherein the plurality of objects in a sheet shape are cut in a state of being obliquely inclined downward toward the first transport unit.

## Description

### [TECHNICAL FIELD]

### Cross Citation with Related Application(s)

This application claims the benefit of Korean Patent Application No. 10-2023-0073172 filed on June 7, 2023 and Korean Patent Application No. 10-2024-0065595 filed on May 21, 2024 in the Korean Intellectual Property Office, the disclosures of which are incorporated herein by reference in their entirety.

The present disclosure relates to an apparatus for manufacturing an electrode assembly, and more particularly, to an apparatus for manufacturing an electrode assembly that enables more precise cutting and transport in a manufacturing process of the electrode assembly, and prevents the occurrence of defects in the electrode assembly.

### (BACKGROUND]

In modern society, as portable devices such as a mobile phone, a notebook computer, a camcorder and a digital camera have been daily used, technologies of a field related thereto has been actively developed. In addition, as a secondary battery capable of being charged and discharged is used as a power source for an electric vehicle (EV), a hybrid electric vehicle(HEV), a plug-in hybrid electric vehicle (P-HEV) and the like as a method for solving air pollution and the like caused by existing gasoline vehicles using fossil fuel, a necessity for the development of the secondary battery is increasing. In addition, the demand for energy storage systems(ESS) equipped with secondary batteries is continuously increasing.

Currently commercialized secondary batteries include a nickel cadmium battery, a nickel hydrogen battery, a nickel zinc battery, a lithium secondary battery, and the like, and among them, the lithium secondary battery has come into the spotlight because it has advantages, for example, being freely charged and discharged, and having very low self-discharge rate and high energy density.

Based on the shape of a battery case, a secondary battery may be classified into a cylindrical battery in which an electrode assembly is mounted in a cylindrical metal container, a prismatic battery in which an electrode assembly is mounted in a prismatic metal container, or a pouch type battery in which an electrode assembly is mounted in a pouch-shaped case made of an aluminum laminate sheet.

First, such a secondary battery is classified according to a structure type of an electrode assembly in which a positive electrode and a negative electrode are stacked with a separator being interposed between the positive electrode and the negative electrode. A representative example of the electrode assembly includes a jelly-roll type (wound type) electrode assembly having a structure in which long sheet-type positive and negative electrodes are wound with a separator interposed therebetween, a stack type (lamination type) electrode assembly having a structure in which a plurality of positive electrodes and negative electrodes cut in units of a predetermined size are sequentially stacked with a separator interposed therebetween, and the like. Recently, in order to solve problems of the jelly-roll type electrode assembly and the stack type electrode assembly, a stacked/folding type electrode assembly, which is a mixed type electrode assembly of the jelly-roll type electrode assembly and the stack type electrode assembly, has been developed.

In addition, such electrode assemblies are manufactured by a method or the like of stacking a plurality of mono-cells having a positive electrode and a negative electrode and stacking half-cells on the outermost side.

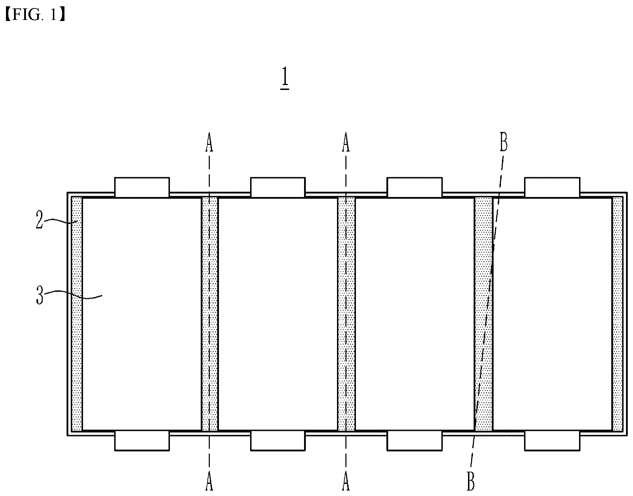

FIG. 1 is a schematic diagram of an object 1 provided in a sheet shape before cutting. The object 1 may be, for example, a mono-cell or a half-cell. The mono-cell may be manufactured, for example, by a method of stacking a separator sheet 2 - positive electrode 3 - separator sheet 2 - negative electrode 3 or separator sheet 2 - negative electrode 3 - separator sheet 2 - positive electrode 3 in that order, and then cutting the separator sheet 1 between adjacent electrodes (positive electrode, negative electrode) 2. The A-A line shows a case where a mono-cell provided in a sheet shape is normally cut, and the B-B line shows a case where a mono-cell provided in a sheet shape is defectively cut.

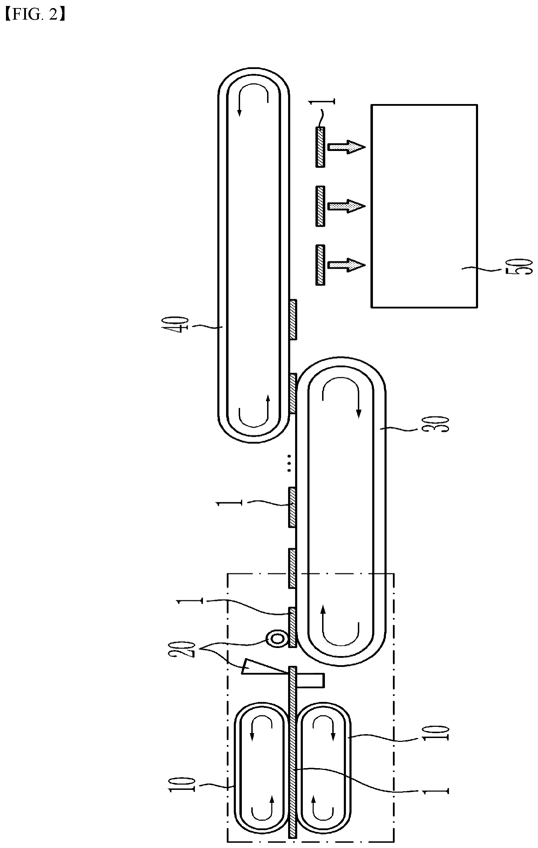

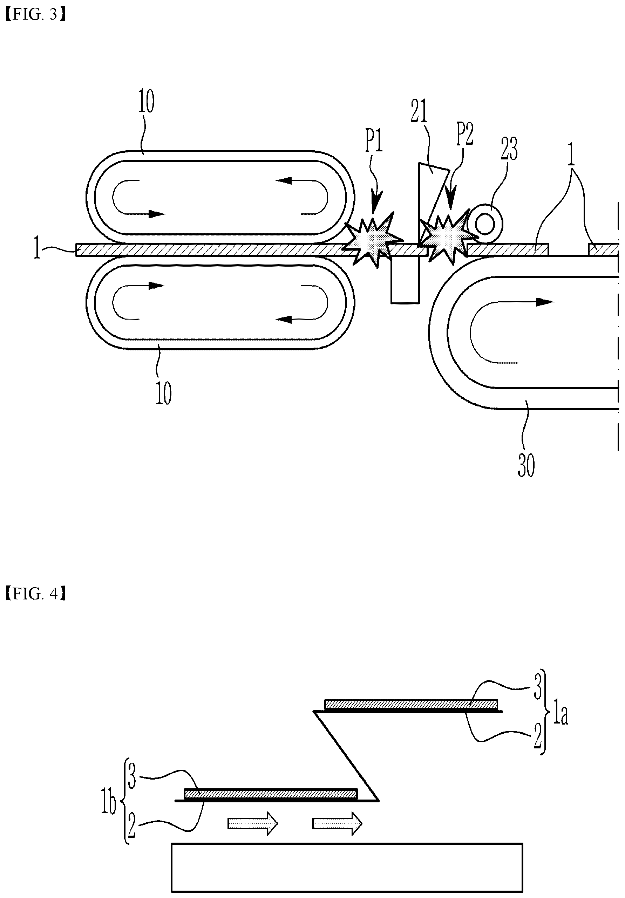

FIG. 2 is a schematic diagram of a conventional electrode assembly manufacturing apparatus. The conventional electrode assembly manufacturing apparatus includes a supply unit 10, a cutting unit 20, a pressing member 23 (see FIG. 3), a first transport unit 30, a second transport unit 40, and a stack unit 50.

The supply unit 10 provides a plurality of objects 1 (e.g., mono-cells or half-cells) in a sheet shape. The plurality of objects 1 may be connected to each other, manufactured in a sheet shape, wound in a roll type, and then may be provided while being unwound again in the supply unit 10. The plurality of objects 1 in a sheet shape are cut for each object (i.e., so as to be separated into one object) by a cutter 21 (see FIG. 3) of the cutting unit 20, and then moved to the first transport unit 30. The pressing member 23 is located at the rear end of the cutting unit 20 and the front end of the first transport unit 30. The plurality of objects 1 in a sheet shape are pressed by the pressing member 23, and then the plurality of objects 1 in a sheet shape are cut for each object 1 by the cutter 21 of the cutting unit 20 along the A-A line (see FIG. 1). The cut object 1 moves along the first transport unit 30 and then moves to the second transport unit 40. The second transport unit 40 is arranged on the stack unit 50 and supplies the object 1 onto the stack unit 50. Thereby, the object 1 is stacked to manufacture an electrode assembly.

On the other hand, referring again to FIG. 1, for example, the object 1 provided in a sheet shape may be provided to the cutting unit 20 in a folded state. At this time, if the folded object 1 sheet is cut by the cutting unit 20, a defect in the object 1 may occur as shown in the B-B line. The case where a defect in the object 1 occurs as shown in the B-B line of FIG. 1 will be described with reference to FIGS. 3 and 4.

FIG. 3 is an enlarged view of the dotted line portion of FIG. 2. At the front end P1 of the cutting unit 20, the object 1 provided in a sheet shape as described above may be folded. FIG. 4 exemplarily outlines the reason why the object 1 is folded. When the preceding object 1 (1a) does not move completely forward in the advancing direction due to the cutting unit 20 or the pressing member 23, the subsequent object 1 (1b) may not move completely forward in the advancing direction due to the supply unit 10 or the air flow (indicated by the arrow), etc. In this case, a folding phenomenon, etc. may occur in the portion where only the separator sheet 2 having a relatively thin thickness exists.

Alternatively, even if the object 1 sheet is normally cut as shown in the A-A line, the alignment may be misaligned in the process of transporting the cut object 1. For example, when the object 1 is seated on the first transport unit 30 at the rear end P2 of the cutting unit 20 of FIG. 3, the alignment of the object 1 may be misaligned. The front surface of the object 1 is not properly seated on the first transport unit 30 at the rear end P2 of the cutting unit 20, and a part of the object 1 may fall off through the gap between the cutting unit 20 and the first transport unit 30. This may cause the object 1 to fold or misalign when the cut object 1 is seated on the first transport unit 30. If the object 1 is stacked in a misaligned state in this way, a defect may occur in the electrode assembly being manufactured.

### [DETAILED DESCRIPTION OF THE INVENTION]

### [Technical Problem]

It is an objective of the present disclosure to provide an apparatus for manufacturing an electrode assembly, and more particularly, an apparatus for manufacturing an electrode assembly that enables more precise cutting and transport in a manufacturing process of the electrode assembly, and prevents the occurrence of defects in the electrode assembly.

However, the technical objective of the present disclosure is not limited to the aforementioned one, and may be extended in various ways within the scope of the technical idea included in the present disclosure.

### [Technical Solution]

According to one embodiment of the present disclosure, there is provided an apparatus for manufacturing an electrode assembly, comprising: a supply unit that supplies a plurality of objects in a sheet shape, a cutting unit that cuts the plurality of objects in a sheet shape for each object, and a first transport unit that includes a transport path for transporting the cut objects, wherein the plurality of objects in a sheet shape are cut in a state of being obliquely inclined downward toward the first transport unit.

The plurality of objects in a sheet shape in the supply unit may move along an inclined surface that is inclined obliquely downward toward the first transport unit.

The cutting unit comprises a pressing member that presses one end part of the object supplied from the supply unit onto a holding surface that holds the object in the first transport unit, and a cutter that cuts other end part of the object when the pressing member presses the one end part of the object, wherein the one end part of the object may be an end part that faces a transport direction, and the other end part of the object may be an end part that faces the opposite side to the transport direction.

The pressing member may press the object while pulling the object in the transport direction immediately before the cutter cuts the other end part of the object.

The pressing member rotates while pressing the object, and a rotation speed of the pressing member may be larger than a supply speed of the supply unit.

The ratio between the rotation speed of the pressing member and the supply speed of the supply unit may be greater than 1 and not greater than 1.2.

The pressing member moves in the direction of movement of the object while pressing the object, and then may return to its original state immediately after the object is cut.

The supply unit may be a supply belt that supports and moves the plurality of objects in a sheet shape, and the pressing member may be a nip roller.

The first transport unit may be a circulation type, and comprise a transport path that transports the cut object, and a return path that returns back after transporting the object.

The first transport unit comprises a plurality of holding members and a rail which is a path along which the plurality of holding members move, and each holding member may hold one or more of the cut objects.

The holding member comprises an adsorption part that holds a front surface of the object in a gas suction manner and a support member that supports the adsorption part, and the adsorption part may be an adsorption plate that includes a plurality of adsorption holes on an adsorption surface to which the object is adsorbed.

The apparatus for manufacturing an electrode assembly may further comprise a manufacturing unit that manufactures an electrode assembly from the object received directly from the first transport unit or from another unit interposed between the first transport unit and the manufacturing unit.

The manufacturing unit may be a stack unit that stacks mono-cells and/or half-cells.

The apparatus for manufacturing an electrode assembly further comprises a second transport unit interposed between the transport path of the first transport unit and the manufacturing unit, wherein the second transport unit may be a circulation type, and comprise a transport path that transports the object transferred from the first transport unit to the manufacturing unit, and a return path that returns back after transporting the object.

The transport path of the first transport unit is located on an upper part of the first transport unit, and the transport path of the second transport unit is located at a lower part of the second transport unit, wherein a terminal end of the transport path of the first transport unit and a start end of the transport path of the second transport unit may overlap each other.

The object may be transported while a holding surface of a holding member of the first transport unit that holds the object and a holding surface of a holding member of the second transport unit that holds the object face each other.

The second transport unit comprises a plurality of holding members and a rail which is a path along which the plurality of holding members move, and each holding member may hold one or more of the cut objects.

The holding member comprises an adsorption part that holds a front surface of the object in a gas suction manner and a support member that supports the adsorption part, and the adsorption part may be an adsorption plate that includes a plurality of adsorption holes on an adsorption surface to which the object is adsorbed.

The object may be a mono-cell or a half-cell.

### [Advantageous Effects]

According to the present disclosure, it is possible to allow more precise cutting and transport in a manufacturing process of an electrode assembly. Accordingly, it is possible to maximize the production efficiency of the electrode assembly and also improve the quality of the produced electrode assembly.

The effects of the present disclosure are not limited to the effects mentioned above and additional other effects not described above will be clearly understood from the detailed description of the appended claims by those skilled in the art.

### [BRIEF DESCRIPTION OF THE DRAWINGS]

FIG. 1 is a schematic diagram of an object provided in a sheet shape before cutting;
FIG. 2 is a schematic diagram of a conventional electrode assembly manufacturing apparatus;
FIG. 3 is a partially enlarged view of the electrode assembly manufacturing apparatus of FIG. 2;
FIG. 4 exemplarily outlines the reason why the object provided in a sheet shape is folded;

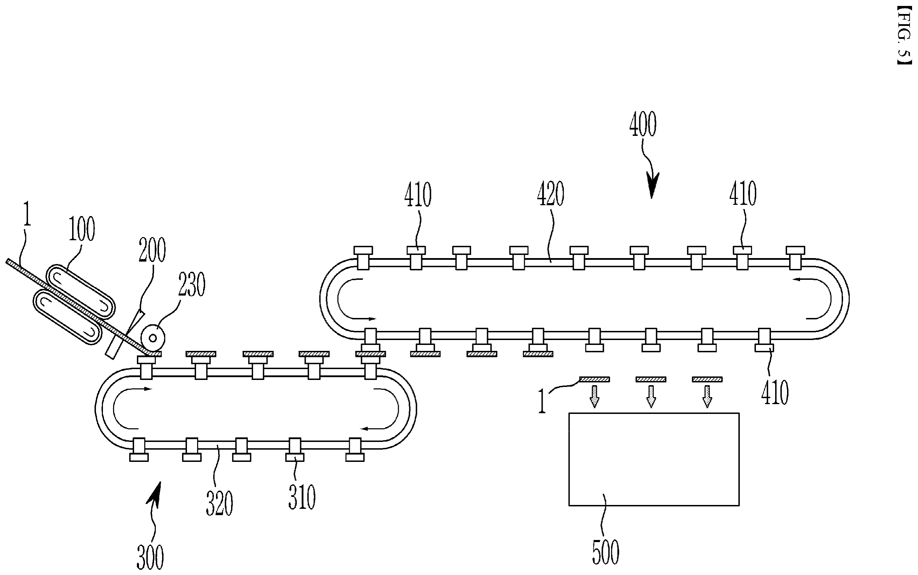

FIG. 5 is a schematic diagram of an apparatus for manufacturing an electrode assembly according to one embodiment of the present disclosure;

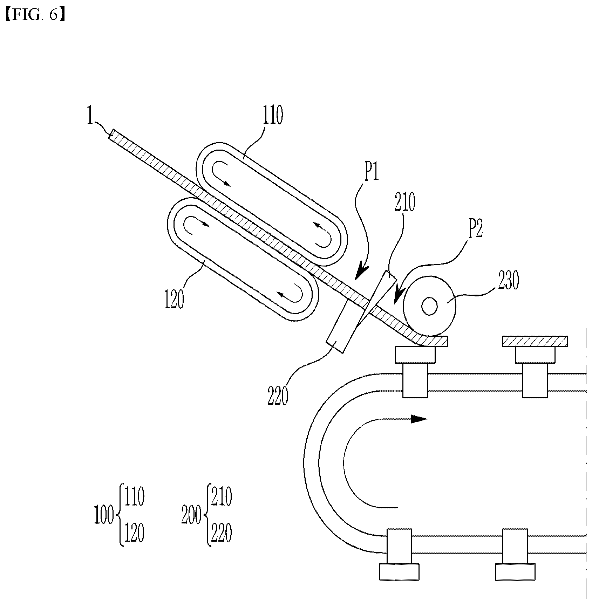

FIG. 6 is a partially enlarged view of the apparatus for manufacturing the electrode assembly of FIG. 5;

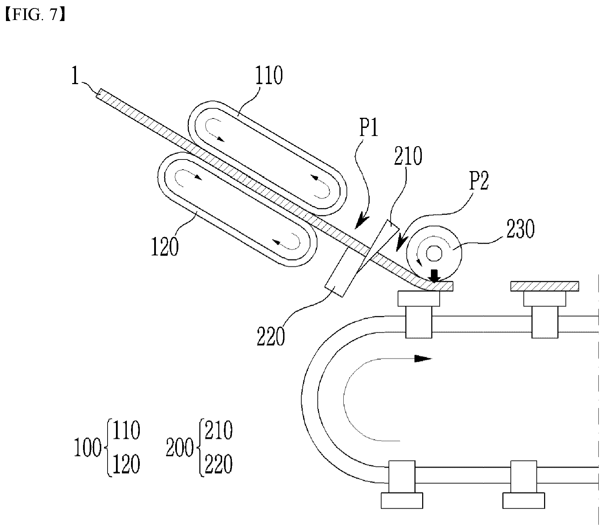

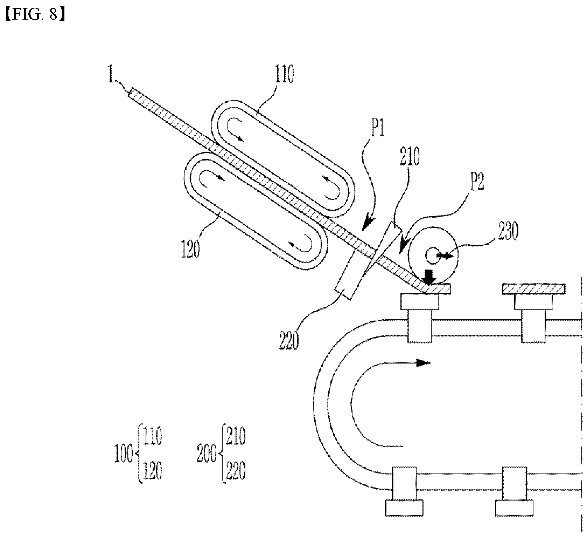

FIGS. 7 and 8 exemplarily illustrate the method in which the pressing member pulls the object as the first and second embodiments of FIG. 6;

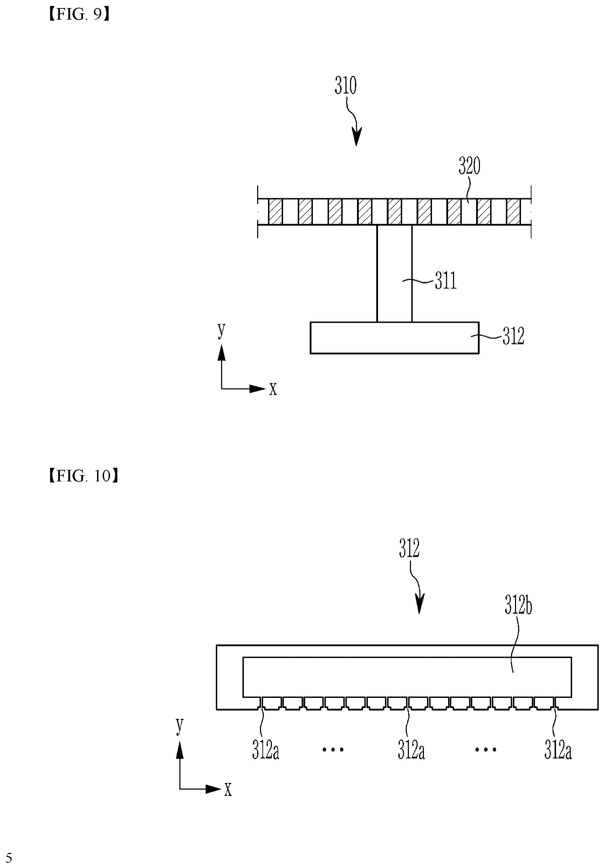

FIG. 9 is a schematic diagram illustrating an example of a holding member included in FIG. 5;
FIG. 10 is a cross-sectional view of an adsorption part of the holding member illustrated in FIG. 9;

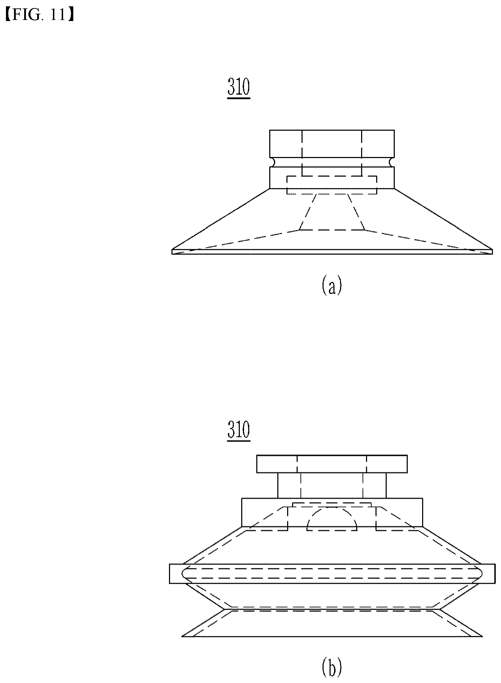

FIG. 11 is a diagram illustrating another example of the holding member of FIG. 9; and

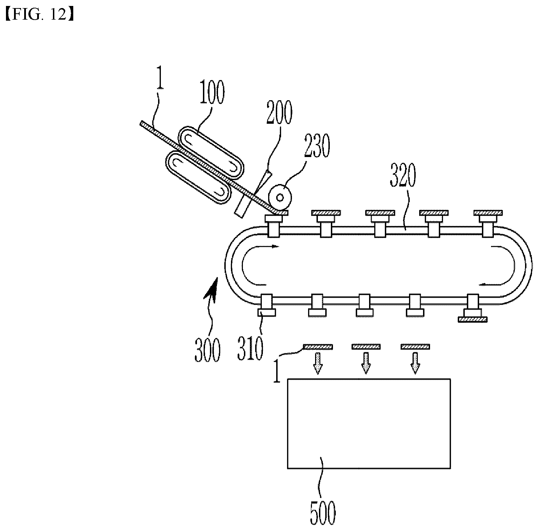

FIG. 12 is a schematic diagram of an apparatus for manufacturing an electrode assembly according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Now, an apparatus for manufacturing an electrode assembly according to one embodiment of the present disclosure will be described with reference to the accompanying drawings.

FIG. 5 is a schematic diagram of an apparatus for manufacturing an electrode assembly according to one embodiment of the present disclosure. FIG. 6 is a partially enlarged view of the apparatus for manufacturing the electrode assembly of FIG. 5.

The apparatus for manufacturing the electrode assembly of FIG. 5 includes a supply unit 100, a cutting unit 200, a first transport unit 300, a second transport unit 400, and a manufacturing unit 500.

The supply unit 100 supplies a plurality of objects 1, which are, for example, made in a sheet shape and connected into one body. The object 1 may be, for example, a mono-cell. However, the present disclosure is not necessarily limited to providing a mono-cell, and may be modified or changed in conformity with various environments in which the invention is applied, such as being applicable to a process of providing a half-cell, etc.

The supply unit 100 may include, for example, a pair of supply belts 110 and 120. The supply belts 110 and 120 may support and move a plurality of objects in a sheet shape. The pair of supply belts 110 and 120 are arranged so as to face each other. The plurality of objects 1 in a sheet shape moves between the pair of supply belts 110 and 120. The pair of supply belts 110 and 120 circulate in opposite directions from each other, and surfaces facing each other circulate toward the cutting unit 200. Each of the pair of supply belts 110 and 120 may be, for example, a conveyor belt. In addition, the pair of supply belts 110 and 120 may be driven by, for example, a servo motor.

On the other hand, the present disclosure is not limited to those shown in the figure, and various modifications and variations are possible. In some cases, the invention can be realized in such a way that only one supply belt 110 is provided, and a plurality of objects 1 in a sheet shape is seated on the supply belt 110 and moved, and pressure is applied onto the object 1 by a roller or the like.

The cutting unit 200 is arranged at the terminal end (rear end) of the supply unit 100 and the start end (front end) of the first transport unit 300. The cutting unit 200 cuts the plurality of objects 1 in a sheet shape supplied from the supply unit 100 for each object 1. At this time, the plurality of objects 1 in a sheet shape are cut in a state of being inclined obliquely downward toward the first transport unit 300. The objects 1 cut by the cutting unit 200 are transported by the first transport unit 300 and finally transferred to the manufacturing unit 500.

The cutting unit 200 includes a cutter 210 that cuts a plurality of objects 1 in a sheet shape for each object 1, and may further include a support member 220. The lower surface of the plurality of objects 1 in a sheet shape discharged from the supply unit 100 may be supported by an upper surface of the support member 220. In addition, the cutting unit 200 includes a pressing member 230 that is arranged at the rear end of the cutter 210 and presses the upper surface of the object 1. The pressing member 230 may be, for example, a nip roller. However, the pressing member 230 of the present disclosure is not limited thereto, and it is sufficient as long as the pressing member 230 can press and fix the object 1, and may be selected and applied in various ways in conformity with an environment in which the invention is realized.

The operation of the cutting unit 200 will be described in detail below with reference to FIG. 6, or the like.

The first transport unit 300 includes, for example, a plurality of holding members 310 and a rail 320 on which the holding members 310 move. The holding member 310 moves the cut object 1. Although one object 1 can be moved per one holding member 310, the present disclosure is not limited thereto and can be modified/changed and applied such as being also able to move a plurality of objects 1. The holding member 310 can, for example, adsorb and move the object 1. For this purpose, the holding member 310 includes an adsorption part 312 (see FIG. 9) that can adsorb the object 1 on the holding surface, and the adsorption part 312 may have, for example, a plate shape. The adsorption part 312 includes a plurality of adsorption holes 312a. The object 1 can be adsorbed by a plurality of adsorption holes 312a (see FIG. 10) on the holding surface of the plate-shaped adsorption part 312. Other shapes and structures of the holding member 310 will be described below with reference to examples of FIGS. 9 to 11.

A plurality of holding members 310 are arranged on the rail 320 at predetermined intervals and move along the rail 320. The rail 320 may be, for example, a circulation type rail. It includes a transport path in which the object 1 cut by the cutting unit 200 is held by the holding member 310 and transported to the second transport unit 400, and a return path in which the object 1 is transferred to the second transport unit 400 and then an empty holding member 310 returns back. The transport path is a path for moving from the supply unit 100 to the second transport unit 400, and the return path is a path for returning back to the supply unit 100 from the second transport unit 400. In the first transport unit 300, the upper path may correspond to the transport path, and the lower path may correspond to the return path.

In the rail 320 of the first transport unit 300, the transport path for transporting the object 1 may be located above the return path along which the empty holding member 310 returns. In addition, the holding surface of the holding member 310 located on the transport path of the first transport unit 300 faces upward. This is to ensure that the object 1 supplied from the supply unit 100 drops downward by gravity and seats on the holding surface of the holding member 310 located on the transport path. The object 1 seated on the holding surface of the holding member 310 of the first transport unit 300 moves along the transport path and is transferred to the second transport unit 400.

The second transport unit 400 also includes a plurality of holding members 410 and a rail 420 along which the holding members 410 move, similar to the first transport unit 300. The holding members 410 of the second transport unit 400 also move the cut object 1. One object 1 may be moved per one holding member 410, but the present disclosure is not limited thereto, and may be modified/changed and applied, such as being able to move a plurality of objects 1. In addition, the holding member 410 of the second transport unit 400 can also adsorb and move the object 1 by way of example, and specific shape and structure of the holding member 410 of the second transport unit 400 can be applied in substantially the same as the holding member 310 of the first transport unit 300, or can be realized by modifying or changing some of them in conformity with an environment to which the invention is applied, and therefore, refer to those described above regarding the holding member 310 of the first transport unit 300.

On the other hand, the terminal end of the transport path of the first transport unit 300 and the start end of the transport path of the second transport unit 400 overlap each other. At this time, a holding surface facing upward of the holding member 310 of the first transport unit 300 and a holding surface facing downward of the holding member 410 of the second transport unit 400 face each other. Thereby, the object 1 located on the holding surface of the holding member 310 of the first transport unit 300 is transferred from the terminal end of the transport path of the first transport unit 300 (at the part overlapping with the start end of the transport path of the second transport unit 400) to the holding surface facing downward of the holding member 410 of the second transport unit 400.

A plurality of holding members 410 are respectively arranged on the rail 420 at predetermined intervals and move along the rail 420. The rail 420 of the second transport unit 400 may also be, for example, a circulation type rail. It includes a transport path along which the object 1 transferred by the first transport unit 300 is held with the holding member 410 and transferred to the manufacturing unit 500, and a return path along which the object 1 is transferred to the manufacturing unit 500 and then the empty holding member 410 returns back. The transport path is a path for moving from the first transport unit 300 to the manufacturing unit 500, and the return path is a path for returning from the manufacturing unit 500 to the first transport unit 300.

In the rail 420 of the second transport unit 400, the transport path along which the object 1 is transported may be located below the return path along which the empty holding member 410 returns. In addition, the holding surface of the holding member 410 located on the transport path of the second transport unit 400 faces downward.

This is to allow the object 1 to be dropped downwards by gravity and provided to the manufacturing unit 500 arranged below the second transport unit 400. For example, when the object 1 is a mono-cell or a half-cell and the manufacturing unit 500 is a stack unit that stacks the mono-cells or half-cells to manufacture an electrode assembly, the object 1 (mono-cell or half-cell) is dropped downwards by gravity to the manufacturing unit 500 arranged below the second transport unit 400 and is seated and stacked on the previously stacked object 1 (stacked mono-cell).

The holding member 410 transports the object 1 to the manufacturing unit 500 along the transport path of the rail 420. When the holding member 410 is located above the manufacturing unit 500, the holding member 410 does not hold (absorb) the object 1, but drops the object 1 downward into the manufacturing unit 500. The object 1 is supplied to the manufacturing unit 500, and then the empty holding member 410 returns back to the first transport unit 300 along the return path, and then receives the object 1 again and transports along the transport path. In addition, the manufacturing unit 500 manufactures an electrode assembly from the object transferred from the second transport unit.

The manufacturing unit 500 manufactures an electrode assembly from the transferred object 1. The manufacturing unit 500 may be, for example, a stack unit that stacks mono-cells and/or half-cells to manufacture an electrode assembly.

The object 1 is transported by the first transport unit 300 and finally transferred to the manufacturing unit 500. At this time, as described above in the embodiment of FIG. 5, a second transport unit 400 is further provided in the path between the first transport unit 300 and the manufacturing unit 500, so that the object 1 can also be transferred to the manufacturing unit 500 in the order of the first transport unit 300 and the second transport unit 400 to manufacture the electrode assembly. In the embodiment of FIG. 12 described below as a modified embodiment, the manufacturing unit 500 can directly receive transmission of the object 1 from the first transport unit 300 and manufacture the electrode assembly. That is, in some cases, it can be realized without the second transport unit 400. Alternatively, although not shown in the embodiment of the present disclosure, in addition to the first transport unit 300 and the second transport unit 400, other additional components may be included to transfer the object to the manufacturing unit 500.

Next, referring to FIG. 6, a case in which a plurality of objects1 in a sheet shape provided from a supply unit 100 is cut for each object 1 by a cutting unit 200 and transferred to a first transport unit 300 will be described in more detail.

First, the object 1 is provided in a sheet shape in which plural objects are connected from the supply unit 100. One end part of the object 1 is located on the holding surface of the holding member 310 of the first transport unit 300. In addition, the other end part of the object 1 is located on the upper surface of the support member 220. Here, the one end part of the object 1 is the terminal end of the object 1 provided in a sheet shape, which is an end part located in the advancing direction of the object 1, and the other end part of the object 1 is an end part located in the direction opposite to the advancing direction of the object 1. In summary, one end part of the object 1 is fixed by the pressing member 230 while being placed on the holding surface of the holding member 310, and the other end part of the object 1 is located while being supported by the upper surface of the support member 220, and the objects 1 connected in sheet shapes following the other end part of the object 1 are located on the supply unit 100. While both end parts of the object 1 are supported in the manner described above, the separator between the object 1 and the subsequent object 1 is cut by the cutting unit 200 (i.e., the cutter 210). That is, the cutting is performed along the line A-A of FIG. 1.

At this time, when the object 1 supplied from the supply unit 100 is cut by the cutting unit 200 and seated on the holding surface of the holding member 310, it is important that the object 1 is not folded.

For example, as described above in FIGS. 3 and 4, when the direction of movement of the object 1 supplied from the supply unit 10 extends in a straight line in the direction of movement of the upper surface of the conveyor belt of the first transport unit 30, the object 1 provided in a sheet shape at the front end P1 of the cutting unit 20 may be folded. Alternatively, when the object 1 cut at the rear end P2 of the cutting unit 20 is seated on the first transport unit 30, the object 1 may be folded or misaligned.

In order to prevent the problems of the prior art described above in FIGS. 3 and 4, according to an embodiment of the present disclosure, a plurality of objects 1 in a sheet shape are cut in a state of being inclined downward toward the first transport unit 300 as shown in FIGS. 5 and 6, and the objects 1 are cut in a state of being pulled by the pressing member 230 as shown in FIGS. 7 and 8.

First, a plurality of objects 1 in a sheet shape supplied to the cutting unit 200 from the supply unit 100 are located on the holding surface of the holding member 310 in a state of being inclined obliquely with respect to the holding surface of the holding member 310 just before cutting the objects 1. The supply unit 100 supplies the objects 1 to the cutting unit 200 so that the objects 1 are inclined obliquely. For this purpose, the direction of movement of the objects 1 in the supply unit 100 has an inclination angle that is inclined obliquely downward toward the first transport unit 300 (more specifically, toward the cutter 210 of the cutting unit 200). For example, the supply belts 110 and 120 have an inclination angle that is inclined obliquely downward toward the first transport unit 300. The object 1 supplied from the supply unit 100 moves along the inclination angle that is inclined obliquely downward toward the first transport unit 300. Thereby, the object 1 supplied to the cutting unit 200 from the supply unit 100 has an inclination angle that is inclined obliquely downward toward the first transport unit 300.

On the other hand, in order to cut the plurality of objects 1 in a sheet shape in a state of being inclined obliquely downward toward the first transport unit 300, the case where the movement path of the plurality of objects 1 in a sheet shape in the supply unit 100 of FIGS. 5 and 6 is inclined obliquely is illustrated. However, the present disclosure is not limited to those illustrated, and it is sufficient that the plurality of objects 1 in a sheet shape are located only in a state of being inclined obliquely downward toward the first transport unit 300 at a position between the supply unit 100 and the cutting unit 200, and the present disclosure can be modified and changed in conformity with an environment in which the invention is realized.

On the other hand, as described above, the object 1 supplied from the supply unit 100 is located on the holding surface of the holding member 310 in a state of being inclined obliquely with respect to the holding surface of the holding member 310 just before cutting the object 1. At this time, one end part of the object 1 can be pressed by the pressing member 230. In addition, while one end part of the object 1 is pressed onto the holding surface of the holding member 310 by the pressing member 230, the pressing member 230 is also pulled in the direction of the transport path of the first transport unit 300 (right direction in FIG. 6).

Thereby, it is possible to prevent a folding phenomenon of the plurality of objects 1 in a sheet shape at the front end P 1 of the cutting unit 200. Since the plurality of objects 1 are properly aligned without being folded during cutting, it is possible to prevent miscutting, improving the cutting quality and significantly reducing the occurrence of defective products.

In more detail, since a plurality of objects 1 in a sheet shape taken out from the supply unit 100 are arranged at an inclination angle that is inclined obliquely downward toward the first transport unit 300 (more specifically, toward the cutter 210 of the cutting unit 200, the objects 1 can be flattened by gravity compared to the case where they are provided in a horizontal direction in the prior art of FIG. 4. In addition, at this time, one end part of the objects 1 is pressed onto the holding surface of the holding member 310 by the pressing member 230 and at the same time, the pressing member 230 is also pulled in the direction of the transport path of the first transport unit 300 (right direction in FIG. 6), so that the objects 1 can be flattened reliably.

FIGS. 7 and 8 exemplarily illustrate the method in which the pressing member 230 pulls the object 1 as the first and second embodiments of FIG. 6.

First, referring to FIG. 7, the pressing member 230 also rotates. At this time, the rotation direction of the pressing member 230 is the same as the rotation direction of the supply belt 110. That is, the supply belt 110 in the supply unit 100 is also located above the object 1, and the pressing member 230 in the cutting unit 200 is also located above the object 1, so that the rotation directions are equal. However, the rotation speed of the pressing member 230 is greater than the supply speed (rotation speed) of the supply belt 110 (similarly, the rotation speed of the pressing member 230 is greater than the supply speed (rotation speed) of the corresponding supply belt 120 with only the rotation direction being different).

In more detail, when the plurality of objects 1 in a sheet shape is pushed by the rotation of the supply belts 110 and 120 of the supply unit 100, the rotation speed of the pressing member 230 is greater than the rotation speed of the supply belts 110 and 120, so that the plurality of objects 1 in a sheet shape is pulled by the rotation of the pressing member 230. At this time, as described above, it goes without saying that one end part of the object 1 is pressed onto the holding surface of the holding member 310 by the pressing member 230.

[Rotation speed of the pressing member 230]/[Supply speed (rotation speed) of the supply belts 110 and 120] may be, for example, greater than 1 and not greater than 1.2. Alternatively, for example, it may be 1.02 or more and 1.08 or less. The pressing member 230 may be, for example, a nip roller. The pressing member 230 may be coupled with a driving means (not shown) that rotates the pressing member 230, and the driving means may be, for example, a servo motor. The rotation speed, rotation time, pressing level, pressing time interval, and the like of the pressing member 230 may be applied in various ways in conformity with an environment in which the invention is realized.

Referring to FIG. 8, the pressing member 230 may not rotate, but may instead move linearly in the direction of the transport path of the object 1 while pressing the object 1. Immediately after cutting the object 1 with the cutter 210, the pressing member 230 returns to its original state. The pressing member 230 may be realized in the form of a non-rotating nip roller, but is not necessarily limited thereto, and is sufficient as long as it has a shape and structure that presses the object 1 but does not damage the object 1. Similarly, a driving means (not shown) is coupled to the pressing member 230. Similarly, the rotation speed, rotation time, pressing level, pressing time interval, and the like of the pressing member 230 may be applied in various ways in conformity with an environment in which the invention is realized.

In addition, the object 1 is cut by the cutting unit 200 at the rear end P2 of the cutting unit 200, and at the same time, the object 1 located in a state of being inclined obliquely upward on the holding surface of the holding member 310 is seated on the holding surface of the holding member 310 without being folded by gravity along the circumferential direction with one end part of the object 1 as the central axis.

The inclination angle of the movement path of the object 1 in the supply unit 100 is, for example, an inclination angle of more than 0 degrees and less than 90 degrees, or 5 degrees or more and 45 degrees or less, or 10 degrees or more and 30 degrees or less, based on the movement path of the object 1 in the movement path of the first transport unit 300. The inclination angle can be adjusted and applied in various ways in conformity with the type of the object 1, the movement speed of the object 1, the environment in which the invention is realized, etc.

FIG. 9 is a schematic diagram illustrating an example of a holding member included in FIG. 5. FIG. 10 is a cross-sectional view of an adsorption part of the holding member illustrated in FIG. 9.

Referring to FIG. 9, the holding member 310 of the present embodiment may be provided as a suction device that applies a gas suction method. The holding member 310 includes a support member 311 that moves the holding member 310 and supports the adsorption part 312, and a adsorption part 312 that temporarily attaches (absorbs) the object 1 by suctioning gas. One end part of the support member 311 located on the rail 320 side may be provided with a driving means (e.g., wheel) that can move the holding member 310 along the rail 320. It is sufficient for the driving means to be capable of moving the holding member 310, and various driving means can be applied.

An adsorption part 312 may be located at the other end part of the support member 311. The adsorption part 312 may include a plurality of adsorption holes 312a so as to be able to adsorb, lift and move the object 1. The plurality of adsorption holes 312a are connected to a suction pipe 312b, and external air may be sucked from the adsorption holes 312a through the suction pipe 312b to adsorb the object 1.

The plurality of adsorption holes 312a may be evenly distributed over the entire suction surface of the adsorption part 312 so that the object 1 does not fold while it is being moving. For example, the adsorption holes 312a can be modified/changed and applied in various ways, such as being arranged in a grid shape over the entire suction surface of the adsorption part 312, or being arranged along multiple straight lines arranged in a row or radially, or being arranged along multiple concentric circles, etc.

FIG. 11 is a diagram illustrating another example of the holding member of FIG. 9. The holding member 310 of FIG. 11 is a suction device that applies a gas suction method, which may be provided as the bellow-type suction cup. The bellow-type holding member 310 can suck gas through a adsorption hole that is opened on a lower side. The bellow-type suction cup may be provided so that its cross section has a reverse taper shape, as shown in (a) of FIG. 11, or may be provided so as to have a cushioning effect that responds to external force and minimizes damage to the object 1 by forming wrinkles on the circumference, as shown in (b) of FIG. 11. The above-mentioned bellow-type suction cup may be provided one in the holding member 310 as needed, or may be provided in a plurality to cover a wider area.

In the above, when explaining the holding member 310, the holding member 310 having a gas suction function was mainly explained. However, the holding member 310 may be provided so as not to have a gas suction function. As one example, the holding member 310 may be provided in the form of a clamp or gripper that holds and fixes the object 1 and moves it, and may be variously modified and changed in conformity with an environment to which the invention is applied.

In addition, the explanation of the holding member 310 described above in FIGS. 9 to 11 may be equally applied to the holding member 410 of the second transport unit 400 of FIG. 5, and redundant explanations will be omitted.

Meanwhile, in the above-mentioned embodiment, the case where each of the first transport unit 300 and the second transport unit 400 of FIG. 5 includes a plurality of holding members 310 and 320 and rails 320 and 420 has been exemplarily described with reference to FIGS. 5 to 11, but the present disclosure is not limited to those described above, and various modifications and changes can be made, such as each of the first transport unit 300 and the second transport unit 400 being realized as a conveyor belt.

FIG. 12 is a schematic diagram of an apparatus for manufacturing an electrode assembly according to another embodiment of the present disclosure.

In the embodiment of FIG. 12, the manufacturing unit 500 may receive transmission of the object 1 directly from the first transport unit 300 to manufacture the electrode assembly. That is, the electrode assembly can be manufactured by transferring the object 1 directly from the first transport unit 300 to the manufacturing unit 500 without going through the second transport unit 400.

For reference, the embodiment of FIG. 5 describes a case in which he electrode assembly is manufactured by receiving transmission of the object 1 from another unit interposed between the first transport unit 300 and the manufacturing unit 500.

In the embodiment of FIG. 12, for the transport path of the first transport unit 300, refer to those described in the embodiment of FIG. 5. In addition, the manufacturing unit 500 may be arranged, for example, below the first transport unit 300. This is to provide the object 1 by dropping downwards by gravity from the lower rail of the first transport unit 300 to the manufacturing unit 500. More specifically, when the object 1 is a mono-cell or a half-cell, and the manufacturing unit 500 is a stack unit that stacks the mono-cells or half-cells to manufacture an electrode assembly, the object 1 (mono-cell or half-cell) is dropped downwards by gravity to the manufacturing unit 500 arranged below the first transport unit 300 and seated on the previously stacked object 1 (stacked mono-cell) to be stacked. After supplying the object 1 to the manufacturing unit 500, the empty holding member 310 of the first transport unit 300 moves toward the side of the supply unit 100 and the cutting unit 200 along the return path, holds the object 1, and then moves again along the transport path.

In the embodiment of FIG. 12, since other descriptions are redundant except for the part described in relation to the second transport unit 400 in FIG. 5, refer to those described above in FIGS. 5 to 11.

Although the invention has been described in detail above with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Symbols]

1: object
100: supply unit
110, 120: supply belt
200: cutting unit
210: cutter
220: support member
230: pressing member
300: first transport unit
310: holding member
320: rail
400: second transport unit
410: holding member
420: rail
500: manufacturing unit

## Claims

1. An apparatus for manufacturing an electrode assembly, comprising:
a supply unit that supplies a plurality of objects in a sheet shape;
a cutting unit that cuts the plurality of objects in a sheet shape for each object; and
a first transport unit that includes a transport path for transporting the cut objects,
wherein the plurality of objects in a sheet shape are cut in a state of being obliquely inclined downward toward the first transport unit.

2. The apparatus for manufacturing an electrode assembly according to claim 1, wherein:
the plurality of objects in a sheet shape in the supply unit move along an inclined surface that is inclined obliquely downward toward the first transport unit.

3. The apparatus for manufacturing an electrode assembly according to claim 1, wherein:
the cutting unit comprises,
a pressing member that presses one end part of the object supplied from the supply unit onto a holding surface that holds the object in the first transport unit; and
a cutter that cuts other end part of the object when the pressing member presses the one end part of the object,
wherein the one end part of the object is an end part that faces a transport direction, and the other end part of the object is an end part that faces the opposite side to the transport direction.

4. The apparatus for manufacturing an electrode assembly according to claim 3, wherein:
the pressing member presses the object while pulling the object in the transport direction immediately before the cutter cuts the other end part of the object.

5. The apparatus for manufacturing an electrode assembly according to claim 4, wherein:
the pressing member rotates while pressing the object, and a rotation speed of the pressing member is larger than a supply speed of the supply unit.

6. The apparatus for manufacturing an electrode assembly according to claim 5, wherein:
the ratio between the rotation speed of the pressing member and the supply speed of the supply unit is greater than 1 and not greater than 1.2.

7. The apparatus for manufacturing an electrode assembly according to claim 4, wherein:
the pressing member moves in the direction of movement of the object while pressing the object, and then returns to its original state immediately after the object is cut.

8. The apparatus for manufacturing an electrode assembly according to claim 3, wherein:
the supply unit is a supply belt that supports and moves the plurality of objects in a sheet shape, and
the pressing member is a nip roller.

9. The apparatus for manufacturing an electrode assembly according to claim 1, wherein:
the first transport unit is a circulation type, and comprises a transport path that transports the cut object, and a return path that returns back after transporting the object.

10. The apparatus for manufacturing an electrode assembly according to claim 1, wherein:
the first transport unit comprises a plurality of holding members and a rail which is a path along which the plurality of holding members move, and
each holding member holds one or more of the cut objects.

11. The apparatus for manufacturing an electrode assembly according to claim 10, wherein:
the holding member comprises an adsorption part that holds a front surface of the object in a gas suction manner and a support member that supports the adsorption part, and
the adsorption part is an adsorption plate that includes a plurality of adsorption holes on an adsorption surface to which the object is adsorbed.

12. The apparatus for manufacturing an electrode assembly according to claim 1,
further comprising a manufacturing unit that manufactures an electrode assembly from the object received directly from the first transport unit or from another unit interposed between the first transport unit and the manufacturing unit.

13. The apparatus for manufacturing an electrode assembly according to claim 12, wherein:
the manufacturing unit is a stack unit that stacks mono-cells and/or half-cells.

14. The apparatus for manufacturing an electrode assembly according to claim 12,
further comprising a second transport unit interposed between the transport path of the first transport unit and the manufacturing unit,
wherein the second transport unit is a circulation type, and comprises a transport path that transports the object transferred from the first transport unit to the manufacturing unit, and a return path that returns back after transporting the object.

15. The apparatus for manufacturing an electrode assembly according to claim 12, wherein:
the transport path of the first transport unit is located on an upper part of the first transport unit, and the transport path of the second transport unit is located at a lower part of the second transport unit,
wherein a terminal end of the transport path of the first transport unit and a start end of the transport path of the second transport unit overlap each other.

16. The apparatus for manufacturing an electrode assembly according to claim 14, wherein:
the object is transported while a holding surface of a holding member of the first transport unit that holds the object and a holding surface of a holding member of the second transport unit that holds the object face each other.

17. The apparatus for manufacturing an electrode assembly according to claim 14, wherein:
the second transport unit comprises a plurality of holding members and a rail which is a path along which the plurality of holding members move, and
each holding member holds one or more of the cut objects.

18. The apparatus for manufacturing an electrode assembly according to claim 17, wherein:
the holding member comprises an adsorption part that holds a front surface of the object in a gas suction manner and a support member that supports the adsorption part, and
the adsorption part is an adsorption plate that includes a plurality of adsorption holes on an adsorption surface to which the object is adsorbed.

19. The apparatus for manufacturing an electrode assembly according to claim 1, wherein:
the object is a mono-cell or a half-cell.
